(19) Europäisches Patentamt
European Patent Office
Office européen des brevets

(11) Veröffentlichungsnummer : **0 072 917**
**B1**

(12) **EUROPÄISCHE PATENTSCHRIFT**

(45) Veröffentlichungstag der Patentschrift : **22.10.86**

(21) Anmeldenummer : **82106386.4**

(22) Anmeldetag : **16.07.82**

(51) Int. Cl.[4] : **C 08 G 63/76**, C 08 L 67/02, C 08 L 23/06, C 08 L 23/12, C 08 K 5/29

(54) **Polyethylenterephthalat mit verbesserter Hydrolysebeständigkeit sowie dessen Verwendung.**

(30) Priorität : **17.08.81 DE 3132371**
**08.05.82 DE 3217440**

(43) Veröffentlichungstag der Anmeldung :
**02.03.83 Patentblatt 83/09**

(45) Bekanntmachung des Hinweises auf die Patenterteilung : **22.10.86 Patentblatt 86/43**

(84) Benannte Vertragsstaaten :
**BE DE FR GB IT NL SE**

(56) Entgegenhaltungen :
**DE-A- 1 770 495**
**DE-A- 2 419 968**
**DE-B- 1 273 193**
**US-A- 3 835 098**
**US-A- 3 963 801**
**Patent Abstracts of Japan, Vol. 1, No. 26, 26. March 1977, page 1130C76**

(73) Patentinhaber : **BASF Aktiengesellschaft**
**Carl-Bosch-Strasse 38**
**D-6700 Ludwigshafen (DE)**

(72) Erfinder : **Matthies, Hans, Georg, Dr.**
**Homburger Strasse 2**
**D-6700 Ludwigshafen (DE)**
Erfinder : **Neuberg, Rainer, Dr.**
**Duerkheimer Strasse 9**
**D-6701 Dannstadt-Schauernheim (DE)**
Erfinder : **Zarate, Jacobo, Dr.**
**Von-Denis-Strasse 20**
**D-6703 Limburgerhof (DE)**

**EP 0 072 917 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Polyethylenterephthalat zeichnet sich durch eine besonders hohe Beständigkeit gegenüber einem weiten Bereich von Chemikalien aus. Wie aus Ludewig, Polyesterfasern, Akademieverlag Berlin 1965, Seiten 328ff bekannt ist, baut Polyethylenterephthalat jedoch unter Einwirkung von heißem Wasser oder Dampf ab und verliert somit seine wertvollen mechanischen Eigenschaften. Es wurde schon versucht, die Hydrolysebeständigkeit von Polyethylenterephthalat zu verbessern. Aus der japanischen Offenlegungsschrift 51/136923 ist zu entnehmen, daß man die Hydrolysebeständigkeit von Polyethylenterephthalat durch Zusatz von 0,1 bis 40 Gew.% an Polyolefinen verbessert. Aus der US-PS 4 071 503 ist zu entnehmen, daß man Polyester mit Polycarbodiimiden stabilisiert. Die so erhaltenen Polyester sind noch nicht ausreichend hydrolysebeständig. Es sind auch schon Konzentrate von Polycarbodiimiden in Polyestern, Polyolefinen oder Ethylenvinylacetatcopolymeren für die Stabilisierung von Polyestern auf dem Markt. Zur Verbesserung der Eigenschaften wurden entsprechend der DL-PS 96242 Polyethylenterephthalat auch schon Polyolefine und zusätzlich Diglycidylether zugesetzt. Die nach dem Stand der Technik bekannten Polyethylenterephthalatmassen sind jedoch hinsichtlich ihrer Hydrolysebeständigkeit Spleißneigung und Steifigkeit noch verbesserungsbedürftig, um ihre Einsatzfähigkeit auf den entsprechenden technischen Gebieten zu erweitern.

Es war deshalb die technische Aufgabe gestellt, Polyethylenterephthalat auf einfache Weise so zu modifizieren, daß dessen Hydrolysebeständigkeit verbessert wird, ohne daß die mechanischen Eigenschaften darunter leiden, insbesondere, ohne daß die Spleißneigung wesentlich erhöht und die Steifigkeit wesentlich erniedrigt wird.

Diese Aufgabe wird gelöst durch Polyethylenterephthalat mit verbesserter Hydrolysebeständigkeit, enthaltend Polyolefine und Stabilisatoren, gekennzeichnet durch einen Gehalt von 1 bis 20 Gew.% an Polyethylen und/oder Polypropylen sowie 0,5 bis 5 Gew.% Polycarbodiimiden der Formel

$$[-A-N=C=N-]_n \qquad (I)$$

in der A einen Phenylen-, Naphthylen-, Diphenylenmethan- oder Diphenylenrest bezeichnet, der bis zu 2 Alkylreste mit 1 bis 4 Kohlenstoffatomen als Substituenten haben kann, und n für eine ganze Zahl von 4 bis 100 steht.

Gegenstand der Erfindung ist auch die Verwendung von Polyethylenterephthalat mit einem Gehalt von 1 bis 20 Gew.% Polyethylen und/oder Propylen sowie 0,5 bis 5 Gew.% Polycarbodiimiden der Formel I, zur Herstellung von Monofilen.

Das erfindungsgemäß modifizierte Polyethylenterephthalat zeichnet sich durch verbesserte Hydrolysebeständigkeit aus und behält auch nach längerer Einwirkung von heißem Wasser oder Dampf eine ausreichende Festigkeit. Zugleich zeichnen sich die modifizierten Polyethylenterephthalatmassen durch geringe Spleißneigung und hohe Steifigkeit aus. Hierdurch wird der technische Anwendungsbereich erheblich vergrößert. Das modifizierte Polyethylenterephthalat nach der Erfindung läßt sich auf einfache Weise herstellen. Es ist bemerkenswert, daß die Einarbeitung eines Konzentrats aus Polycarbodiimiden und Polyethylen oder Polypropylen in Polyethylenterephthalat bessere Ergebnisse erbringt, als wenn man die genannten Polyolefine und Polycarbodiimide für sich dem Polyethylenterephthalat einverleibt. Es ist auch bemerkenswert, daß der Zusatz der genannten Polyolefine und Polycarbodiimide synergistisch wirkt, d. h., daß sie eine größere gemeinsame Wirkung haben als die einzelnen Zusätze allein. Die verbesserte stabilisierende Wirkung der erfindungsgemäßen Zusätze wirkt sich auch in einer höheren relativen Viskosität und niedrigeren Carboxylgruppenzahl nach längerer Einwirkung von heißem Wasser oder Dampf aus.

Man geht von hochmolekularem, linearem Polyethylenterephthalat aus. Bevorzugt hat das verwendete Polyethylenterephthalat eine relative Viskosität von 1,35 bis 1,40, gemessen in 0,5 gew.%iger Lösung von o-Dichlorbenzol und Phenol im Verhältnis 2 : 3 bei 25 °C. Darüber hinaus kann es bis zu 10 Mol% andere Polyester bildende Diole und/oder Dicarbonsäuren enthalten.

Das als Zusatz verwendete Polyethylen hat vorteilhaft eine Dichte von 0,91 bis 0,93 und einen Schmelzindex, gemessen nach DIN 53735 von 0,1 bis 1, insbesondere 0,5 bis 1,0. Das als Zusatz verwendete Polypropylen hat vorteilhaft eine Dichte von 0,9 bis 0,91 sowie einen Schmelzindex, gemessen nach DIN 16774 von 1,5 bis 3,0. Es versteht sich, daß auch Mischungen von Polyethylen und Polypropylen angewendet werden können. Polyethylen und/oder Polypropylen setzt man in Mengen von 1 bis 20 % zu. Besonders bewährt hat sich ein Zusatz von 5 bis 15 Gew.%, insbesondere 7 bis 10 Gew.%, für den Fall, daß eine besonders hohe Hydrolysebeständigkeit gewünscht ist. Wird eine geringe Spleißneigung und hohe Steifigkeit gefordert, hat sich ein Zusatz von Polyethylen und/oder Polypropylen in Mengen von 1 bis $<$ 5 Gew.%, insbesondere von 3 bis 4,5 Gew.% bewährt.

Die als Zusatz verwendeten Polycarbodiimide sind solche der Formel

$$[-A-N=C=N-]_n \qquad (I)$$

in der A einen Phenylen-, Naphthylen-, Diphenylenmethyl- oder Diphenylenrest bezeichnet, der bis zu 2

Alkylreste mit 1 bis 4 Kohlenstoffatomen als Substituenten haben kann, und n für eine ganze Zahl von 4 bis 100 steht. Geeignete Polycarbodiimide sind beispielsweise Polytolylcarbodiimid, Poly-4,4'-diphenylmethancarbodiimid, Poly-3,3'-dimethyl-4,4-biphenylen-carbodiimid, Polyparaphenylencarbodiimid, Polymetaphenylencarbodiimid, Poly-3,3'-dimethyl-4,4'-diphenylmethancarbodiimid. Besonders bevorzugte Polycarbodiimide sind Polytolylcarbodiimid und Poly-4,4'-diphenylmethancarbodiimid. Vorteilhaft haben die Polycarbodiimide ein Molekulargewicht von 450 bis 10 000, besonders geeignete Polycarbodiimide haben ein Molekulargewicht von 800 bis 8 000, insbesondere 1 000 bis 6 500. Geeignete Polycarbodiimide werden beispielsweise beschrieben in der US-PS 4 071 503. Die genannten Polycarbodiimide werden in einer Menge von 0,5 bis 5 Gew.% angewandt. Besonders bewährt hat sich ein Zusatz von 0,5 bis 2, insbesondere 1,0 bis 1,5 Gew.%. Die Angaben beziehen sich jeweils auf die Polyethylenterephthalat, Polyethylen oder Polypropylen und Polycarbodiimide enthaltende Masse.

Die Zusätze Polyethylen oder Polypropylen sowie Polycarbodiimide können dem Polyethylenterephthalat getrennt zugesetzt werden. Man mischt hierzu beispielsweise Polyethylenterephthalat, Polyethylen und/oder Polypropylen sowie Polycarbodiimide im festen Zustand und stellt durch Mischen im Extruder oder Kneter eine homogene Mischung her. Besonders bewährt hat es sich, wenn man zunächst Polyethylen und/oder Polypropylen mit Polycarbodiimiden der Formel I in der Schmelze mischt, z. B. bei 200 bis 280 °C und dann das so erhaltene Konzentrat dem Polyethylenterephthalat zumischt. Hierbei ist es möglich, daß man das Konzentrat aus Polycarbodiimiden der Formel I in Polyethylen und/oder Polypropylen als Granulat anwendet und mit festem Polyethylenterephthalat mischt und dieses dann in geeigneten Vorrichtungen, wie Knetern oder Extrudern, in der Schmelze mischt, oder daß man direkt die Schmelze des Konzentrats mit schmelzflüssigem Polyethylenterephthalat in geeigneten Mischvorrichtungen, wie Knetern oder Extrudern, homogenisiert. Hierbei wendet man vorteilhaft Temperaturen von 260 bis 280 °C an.

Die erfindungsgemäß modifizierten Polyethylenterephthalatmassen eignen sich besonders zur Herstellung von Monofilen. Solche Monofile haben beispielsweise einen Durchmesser von 0,2 bis 1,0 mm und werden durch Verspinnen aus der Schmelze bei 250 bis 300 °C und anschließendes Verstrecken im Verhältnis von 1 : 3,0 bis 6,0 hergestellt. Sie eignen sich besonders auf Anwendungsgebieten, die eine besonders hohe Hydrolysebeständigkeit erfordern, z. B. als Siebe bei der Papierherstellung.

Die erfindungsgemäßen Gegenstände seien an folgenden Beispielen veranschaulicht. Polyethylenterephthalat sei im folgenden « PETP » genannt.

### Vergleichsbeispiel 1 ohne Zusätze, Blindversuch

PETP mit einer relativen Viskosität von 1,370 (gemessen in 0,5gew.%iger Lösung von o-Dichlorbenzol/Phenol 2 : 3 bei 25 °C) wurde in an sich bekannter Weise mit Hilfe eines Einwellenextruders zu Monofilamenten von 0,5 mm Durchmesser versponnen und verstreckt.

Die so erhaltenen Drähte hatten eine relative Viskosität von 1,365, eine Carboxylgruppenzahl von 20 mg Å/kg (gemessen in Nitrobenzol durch pot. Titr. mit alkoholischem KOH) und eine Reißfestigkeit von 37 CN/dtex.

Die Drähte wurden mehrere Tage lang mit Wasser bei 120 °C behandelt. Nach 5 Tagen Behandlung hatten die Drähte eine relative Viskosität von 1,168, eine Carboxylgruppenzahl von 107 und eine Restfestigkeit von 33 % der Ausgangsfestigkeit. Nach 9 Tagen hatten die Drähte praktisch keine Festigkeit mehr.

### Vergleichsbeispiel 2 mit 7 % Polyethylen

Zu 93 Gewichtsteilen PETP der relativen Viskosität 1,37 wurden in einem Zweiwellenschneckenextruder mit Mischelementen 7 Gewichtsteile Polyethylen der Dichte 0,922 bis 0,924 und des Schmelzindex 0,6 bis 0,9 (DIN 53735) bei 260 bis 280 °C zugemischt.

Das Gemisch wurde, wie in Beispiel 1 beschrieben, zu Drähten versponnen und mit Wasser bei 120 °C behandelt.

Die Drähte hatten nach 9 Tagen Behandlungszeit praktisch keine Festigkeit mehr und die Carboxylgruppenzahl lag bei 307.

### Vergleichsbeispiel 3 mit 1,5 % Polycarbodiimid

Zu 98,5 Gewichtsteilen PETP der relativen Viskosität 1,37 werden 1,5 Gewichtsteile Poly-[(2,6-diisopropylbenzol)-carbodiimid] in einem Zweiwellenschneckenextruder zugemischt und die Mischung wie in Beispiel 1 beschrieben zu Drähten versponnen.

Die Drähte wurden mit Wasser bei 120 °C behandelt und hatten nach 9-tägiger Behandlung eine Restfestigkeit von 40 % und eine Carboxylgruppenzahl von 120.

### Beispiel 1 mit 7 % Polyethylen und 1,5 % Polycarbodiimid

Zu 91,5 Gewichtsteilen PETP der relativen Viskosität 1,37 werden 7 Gewichtsteile Polyethylen des im

Vergleichsbeispiel 2 beschriebenen Typs und 1,5 Gewichtsteile Poly[2,6-diisopropylbenzol)-carbodiimid] in einem Extruder zugemischt. Das Gemisch wird gemäß Vergleichsbeispiel 1 zu Drähten versponnen.

Die Drähte hatten eine relative Viskosität von 1,36, eine Carboxylgruppenzahl von 6 und eine Reißfestigkeit von 36 CN/tex.

Nach 9-tägiger Behandlung mit Wasser bei 120 °C hatten die Drähte eine relative Viskosität von 1,217, eine Carboxylgruppenzahl von 55 und eine Restfestigkeit von 71 %.

Beispiel 2 mit 15 % Polyethylen und 1 % Polycarbodiimid

Beispiel 1 wurde wiederholt, wobei aber 15 Gewichtsteile Polyethylen und 1 Gewichtsteil Polycarbodiimid zu PETP zugemischt wurden.

Die Eigenschaften der unbehandelten Drähte waren :

| | |
|---|---|
| rel. Visk. : | 1,370 |
| Carboxylgruppenzahl : | 5 |
| Reißfestigkeit : | 32 CN/dtex |

Nach 9 Tagen Behandlung mit Wasser bei 120 °C :

| | |
|---|---|
| Restfestigkeit : | 86 % |
| Carboxylgruppenzahl : | 70 |
| rel. Visk. : | 1,207 |

Beispiel 3 mit 7 % Polypropylen und 1,5 % Polycarbodiimid

Beispiel 1 wurde wiederholt, wobei aber anstelle des Polyethylens 7 Gewichtsteile Polypropylen der Dichte 0,907 und des Schmelzindex 1,8 eingesetzt wurden.

Nach 9-tägiger Behandlung mit Wasser bei 120 °C hatten die Drähte noch eine Restfestigkeit von 62 % und eine Carboxylgruppenzahl von 80.

Beispiel 4 mit Stabilisatorkonzentrat 1

a) Herstellen des Stabilisatorkonzentrats 1

90 Gewichtsteile Polyethylen des Vergleichsbeispiels 2 und 10 Gewichtsteile Polycarbodiimid des Beispiels 1 wurden in einem Zweiwellenextruder mit Mischelementen bei 260 bis 280 °C vermischt.

b) 83,5 Gewichtsteile PETP der relativen Viskosität 1,37 wurden mit 16,5 Gewichtsteilen des Stabilisatorkonzentrats 1 mechanisch gemischt und gemäß Beispiel 1 zu Drähten versponnen.

Die unbehandelten Drähte hatten folgende Eigenschaften :

| | |
|---|---|
| rel. Visk. : | 1,370 |
| Carboxylgruppenzahl : | 5 |
| Reißfestigkeit : | 35 CN/dtex |

Nach 9 Tagen Wasserbehandlung bei 120 °C :

| | |
|---|---|
| rel. Visk. : | 1,309 |
| Carboxylgruppenzahl : | 24 |
| Restfestigkeit : | 91 % |

Beispiel 5 mit Stabilisatorkonzentrat 2

a) Herstellen des Stabilisatorkonzentrats 2

80 Gewichtsteile Polypropylen Beispiels 3 und

20 Gewichtsteile Polycarbodiimid des Beispiels 1 wurden wie in Beispiel 4 beschrieben vermischt.

b) 91,5 Gewichtsteile PETP der relativen Viskosität 1,37 wurden mit 8,5 Gewichtsteilen Stabilisatorkonzentrat 2 mechanisch gemischt und gemäß Beispiel 1 zu Drähten versponnen.

Die unbehandelten Drähte hatten folgende Eigenschaften :

| | |
|---|---|
| rel. Visk. : | 1,355 |
| Carboxylgruppenzahl : | 4 |
| Reißfestigkeit : | 34,8 CN/dtex |

Die behandelten Drähte (9 Tage Wasser 120 °C) hatten

| | |
|---|---|
| rel. Visk. : | 1,268 |
| Carboxylgruppenzahl : | 26 |
| Restfestigkeit : | 89 % |

Die Ergebnisse der Vergleichsbeispiele und Beispiele sind in der Tabelle zusammengefaßt dargestellt.

(Siehe Tabelle Seite 6 f.)

Folgende Beispiele zeigen den Einfluß der erfindungsgemäßen Zusätze auf die Spleißneigung und Steifigkeit.

Vergleichsbeispiel 4 ohne Zusätze, Blindversuch

PETP mit einer relativen Viskosität von 1,370 (gemessen in 0,5gew.%iger Lösung von o-Dichlorbenzol/Phenol 2 : 3 bei 25 °C) wurde in an sich bekannter Weise mit Hilfe eines Einwellenextruders zu Monofilamenten von 0,5 mm Durchmesser versponnen und verstreckt.

Die so erhaltenen Drähte hatten eine relative Viskosität von 1,365, eine Carboxylgruppenzahl von 20 mg Å/kg (gemessen in Nitrobenzol durch potentiometrische Titration mit alkoholischer KOH) und eine Reißfestigkeit von 37 CN/dtex. Die Spleißneigung betrug 0 und die Steifigkeit 25,1 CN.

Die Drähte wurden mehrere Tage lang mit Wasser bei 120 °C behandelt. Nach 5 Tagen Behandlung hatten die Drähte eine relative Viskosität von 1,168, eine Carboxylgruppenzahl von 107 und eine Restfestigkeit von 33 % der Ausgangsfestigkeit. Nach 8 Tagen hatten die Drähte praktisch keine Festigkeit mehr.

Vergleichsbeispiel 5 mit Stabilisatorkonzentrat 3

a) Herstellen des Stabilisatorkonzentrats 3
94 Gew.-Teile Polypropylen der Dichte 0,907 und des Schmelzindex 1,8 und
6 Gew.-Teile Poly-[2,6-diisopropylbenzol-carbodiimid]
wurden in einem Zweiwellenextruder mit Mischelementen bei 260 bis 280 °C vermischt.

b) 84 Gew.-Teile PETP der relativen Viskosität 1,37 wurden mit 16 Gew.-Teilen Stabilisatorkonzentrat 3 mechanisch gemischt und gemäß Vergleichsbeispiel 4 zu Drähten versponnen.

Die unbehandelten Drähte hatten folgende Eigenschaften :

| | |
|---|---|
| rel. Viskosität : | 1,355 |
| Carboxylgruppenzahl : | 4 |
| Reißfestigkeit : | 34,8 CN/dtex |
| Spleißneigung : | sehr stark (Note 6) |
| Steifigkeit (CN) : | 21,9 |

Die behandelten Drähte (8 Tage Wasser 120 °C) hatten folgende Eigenschaften :

| | |
|---|---|
| rel. Viskosität : | 1,120 |
| Carboxylgruppenzahl : | 140 |
| Restfestigkeit : | 44 % |

Beispiel 6 mit Stabilisatorkonzentrat 4

a) Herstellen des Stabilisatorkonzentrats 4
75 Gew.-Teile Polypropylen des Vergleichsbeispiels 2 und 25 Gew.-Teile Polycarbodiimid des Vergleichsbeispiels 2 wurden wie dort beschrieben vermischt.

b) 96 Gew.-Teile PETP der relativen Viskosität 1,37 wurden mit 4 Gew.-Teilen Stabilisatorkonzentrat 4 mechanisch gemischt und gemäß Vergleichsbeispiel 1 zu Drähten versponnen.

Die unbehandelten Drähte hatten folgende Eigenschaften :

| | |
|---|---|
| rel. Viskosität : | 1,377 |
| Carboxylgruppen : | 7 |
| Reißfestigkeit : | 35 CN/dtex |
| Spleißneigung : | schwach (Note 1) |
| Steifigkeit : | 24,1 CN |

Die behandelten Drähte (8 Tage Wasser 120 °C) hatten folgende Eigenschaften :

| | |
|---|---|
| rel. Viskosität : | 1,23 |
| Carboxylgruppenzahl : | 55 |
| Restfestigkeit : | 79 % |

Die Spleißneigung wird durch qualitative Beurteilung der Bruchenden gerissener Monofile und

Übersicht Beispiele 1-8 und Vergleichsbeispiele 1-3

| Beispiele | Stabilisatorsystem | Eigenschaften der Drähte vor rel. Visc | -COOH (mgÄ/kg) | Reißfestigkeit (CN/dtex) | nach Behandlung mit Wasser (9 Tage 120°C rel. Visc. | -COOH | Restfestigkeit in % der Ausgangsfestigkeit |
|---|---|---|---|---|---|---|---|
| Vgl. 1 | - | 1,365 | 20 | 37 | - | - | 0 |
| " 2 | 7 % Polyethylen | 1,337 | 20 | 31,2 | 1,090 | 307 | 0 |
| " 3 | 1,5 % Polycarbodiimid | 1,370 | 7 | 35,0 | 1,157 | 120 | 40 |
| Beisp. 1 | 7 % Polyethylen + 1,5 % Polycarbodiimid | 1,36 | 6 | 36 | 1,217 | 55 | 71 |
| " 2 | 15 % Polyethylen + 1 % Polycarbodiimid | 1,374 | 5 | 32 | 1,207 | 73 | 73 |
| " 3 | 7 % Polypropylen + 1,5 % Polycarbodiimid | - | - | 36,2 | - | 80 | 62 |
| " 4 | Stabilisatorkonzentrat aus Polyethylen + Polycarbodiimid (16,5 % Zusatz zu PETP) | 1,370 | 5 | 35 | 1,309 | 24 | 91 |
| " 5 | Stabilisatorkonzentrat aus Polypropylen + Polycarbodiimid (20 % Zusatz zu PETP) | 1,355 | 4 | 34,0 | 1,268 | 26 | 89 |

Bewertung zwischen 0 (keine Spleißneigung) und 6 (sehr starke Spleißneigung) ermittelt.

Zur Bestimmung der Steifigkeit wurden gerade Stücke des zu messenden Drahtes von ca. 50 mm Länge angefertigt und die zur Verformung um 30° Biegewinkel erforderliche Kraft mit Hilfe eines handelsüblichen elektronischen Steifigkeitsmessers bestimmt.

**Patentansprüche**

1. Polyethylenterephthalat mit verbesserter Hydrolysebeständigkeit, enthaltend Polyolefine und Stabilisatoren, gekennzeichnet durch einen Gehalt von 1 bis 20 Gew.% Polyethylen und/oder Polypropylen sowie 0,5 bis 5 Gew.% Polycarbodiimiden der Formel

$$[-A-N=C=N-]_n \quad (I)$$

in der A einen Phenylen-, Naphthylen-, Diphenylenmethan- oder Diphenylenrest bezeichnet, der bis zu 2 Alkylreste mit 1 bis 4 Kohlenstoffatomen als Substituenten haben kann, und n für eine ganze Zahl von 4 bis 100 steht.

2. Polyethylenterephthalat nach Anspruch 1, gekennzeichnet durch einen Gehalt von 5 bis 15 Gew.% Polyethylen und/oder Polypropylen.

3. Polyethylenterephthalat nach den Anspruch 1, gekennzeichnet durch einen Gehalt von 3 bis 4,5 Gew.% Polyethylen und/oder Polypropylen.

4. Polyethylenterephthalat nach den Ansprüchen 1 bis 3, gekennzeichnet durch einen Gehalt an Polyethylen der Dichte 0,91 bis 0,93 oder Polypropylen der Dichte 0,90 bis 0,91.

5. Polyethylenterephthalat nach den Ansprüchen 1 bis 4, gekennzeichnet durch einen Zusatz an Polycarbodiimiden der Formel I mit einem Molekulargewicht von 800 bis 8 000.

6. Polyethylenterephthalat nach den Ansprüchen 1 bis 5, gekennzeichnet durch einen Gehalt von 0,5 bis 2 Gew.% Polycarbodiimiden der Formel I.

7. Verwendung von Polyethylenterephthalat nach Anspruch 1 zur Herstellung von Monofilen.

**Claims**

1. A polyethylene terephthalate exhibiting improved resistance to hydrolysis and containing polyolefins and stabilizers, which has a polyethylene and/or polypropylene content of from 1 to 20 % by weight and contains from 0.5 to 5 % weight of polycarbodiimides of the formula

$$[-A-N=C=N-]_n \quad (I)$$

where A is phenylene, naphthylene, diphenylenemethane or diphenylene which may bear 1 or 2 alkyl radicals of 1 to 4 carbon atoms as substituents, and n is an integer from 4 to 100.

2. A polyethylene terephthalate as claimed in claim 1, which contains from 5 to 15 % by weight of polyethylene and/or polypropylene.

3. A polyethylene terephthalate as claimed in claim 1, which contains from 3 to 4.5 % by weight of polyethylene and/or polypropylene.

4. A polyethylene terephthalate as claimed in claims 1 to 3, which contains polyethylene having a density of from 0.91 to 0.93 or polypropylene having a density of from 0.90 to 0.91.

5. A polyethylene terephthalate as claimed in claims 1 to 4, which contains polycarbodiimides of the formula I having a molecular weight of from 800 to 8,000.

6. A polyethylene terephthalate as claimed in claims 1 to 5, which contains from 0.5 to 2 % by weight of polycarbodiimides of the formula I.

7. The use of a polyethylene terephthalate as claimed in claim 1 for the production of monofilaments.

**Revendications**

1. Téréphtalate de polyéthylène de résistance à l'hydrolyse améliorée, contenant des polyoléfines et des stabilisants, caractérisé par une teneur de 1 à 20 % en poids en polyéthylène et/ou polypropylène ainsi que 0,5 à 5 % en poids de polycarbodiimides de formule :

$$[-A-N=C=N-]_n \quad (I)$$

dans laquelle A représente un reste phénylène, naphtylène, diphényle-méthane ou diphénylène, qui peut avoir comme substituants 2 restes alkyle ayant 1 à 4 atomes de carbone, et n représente un nombre entier de 4 à 100.

2. Téréphtalate de polyéthylène selon la revendication 1, caractérisé par une teneur de 5 à 15 % en

poids en polyéthylène et/ou polypropylène.

3. Téréphtalate de polyéthylène selon la revendication 1, caractérisé par une teneur de 3 à 4,5 % en poids en polyéthylène et/ou polypropylène.

4. Téréphtalate de polyéthylène selon les revendications 1 à 3, caractérisé par une teneur en polyéthylène de densité 0,91 à 0,93 ou en polypropylène de densité 0,90 à 0,91.

5. Téréphtalate de polyéthylène selon les revendications 1 à 4, caractérisé par une addition de polycarbodiimides de formule I d'un poids moléculaire de 800 à 8 000.

6. Téréphtalate de polyéthylène selon les revendications 1 à 5, caractérisé par une teneur de 0,5 à 2 % en poids en polycarbodiimides de formule I.

7. Utilisation de téréphtalate de polyéthylène selon la revendication 1, pour la préparation de monofils.